# EUROPEAN PATENT APPLICATION

(11) **EP 2 184 136 A1**
(43) Date of publication of application: **12.05.2010**
(21) Application number: 09478003.8
(22) Date of filing: 14.09.2009
(51) Int. Cl.: B25B 23/14, B23P 19/06, G01M 7/08

(54) **Method and equipment of control of detail connection by threaded joint**

(30) Priority: 11.11.2008 LT 2008085
(71) Applicant: Vilnius Gediminas Technical University, 10223 Vilnius-40 (LT)
(72) Inventor: Augustaitis, Vytautas Kazimieras, 07143 Vilnius (LT); Bucinskas, Vytautas, 10231 Vilnius (LT)
(74) Representative: Einoris, Vytautas

(57) **Abstract**

Invention is intended to tightening control of responsible details tightening by bolts, pins and nuts in the machines, technical equipment, buildings, etc. during assembling and exploiting period. Purpose of invention - develop new and convenient method and equipment for tightening control of mentioned details.

Presented method is based on separate tightening of every bolt or pin of mentioned details by comparing one or several dynamic characteristics of vibrating system "bolt or pin - tightened details", depending of tightening degree with one or several known dynamic characteristics. It is assumed these characteristics to be as natural frequencies of mentioned system, amplitude-frequency, amplitude-phase, frequency-phase characteristics, transfer functions of systems and characteristics, derived from these. All these characteristics are taken from natural vibrations, excited by light impact to bolt or nut, by recording these vibrations as relative and, in other case, as absolute vibrations by sensor for further computer analysis. In case, when impact can't be assumed as momentary, force impact can be applied by special hammer or analogical device with force sensor. In opposite case, signal of force in unnecessary. In such case force impact can be applied by simple hammer or using special device, which shoots ball to surface of bolt or nut.

Presented method and realizing device not require special design if bolts, pins, nuts, washers and other elements of tightened details.

Method and device is shown in fig. 1, 2, 3, 4, 5, 6, 7.

## Description

### 1. Area of engineering, invention belongs to

Invention is intended to use for control of responsible threaded joints in machines, buildings, ships, reactors etc., particularly to check and control these threaded joints during their assembly process and lifetime.

As tightened by threaded joints details are assumed two or more jointed together by bonding surfaces various components, using bolts with heads, bypassed through holes without thread and tightened by threaded nuts, screwed on bolt beams; tightened by bolts with heads, when bolts are screwed in to the last detail and bolt beams are bypassed through holes in intermediate details without thread; by pins with thread beam and screwed by nuts on both ends and pin are bypassed through holes without thread joint or by pins, threaded in to the last detail, bypassed through holes without thread in intermediate details and tightened by nut at the free end.

### 2. State of Art

There are known different methods of tightening control of bonded by contact surfaces and tightened by threaded joint.

As control method can be used measure of bolt or nut tightening moment by dynamometric wrench, measure of bolt or nut rotation angle, evaluation of gap between bonded surfaces or measuring axial force, applied to bolt or pin (PeIIIeTOB 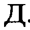 . H., 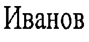 A. C., Φa 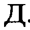 eeB. 3. Ha 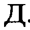 ë 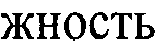 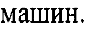 - 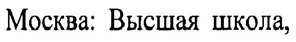 1988; Roloff/Matek. Machinenelemente. 16 Auflage, 2003 ir kt.).
First mentioned methods are influenced by value of friction force in threaded joint and therefore not fully reliable and accurate.
There are known method, when tightening value is characterized by gap between bonding surfaces, which is measured by ultrasonic method and tightening force is assumed sufficient, when gap disappears (for example SU 173717 A1). This method application is limited, while free access to these surfaces is seldom and results of measurement is not very accurate and stable, also expensive and sophisticated equipment required.
More accurate method is to measure elongation of tightened bolt or pin, caused by tension force from tightening. To use of this method it is necessary to special design of bolts and washers (for example, SU 1564417 A1; SU 1679077 A1), by using methods of tenzometry, 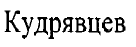 B. H. 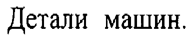 - 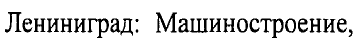 1980), which is limiting practical implementation of presented method.
There are also known method of detail tightening bolt or pin with nut tightening degree evaluation using elongation from applied axial force, which is detected by bypassing ultrasonic waves and comparing reflection of these waves from end of bolt or pin, then retrieving phase difference from ultrasonic wave and its reflection (http://www.surebolt.com/surebolt.htm). This technique requires to know exact length of bolt or pin in non-tensed state. Length of bolt beam or pin varies within prescribed tolerance and this field of tolerance not a narrow one, therefore this use this length as measurement basis is technologically not convenient. Also ultrasonic waves are dispersed during propagating along threaded beam that is why method requires sophisticated equipment.
Mostly close to proposed method is known method and apparatus of threaded joint tightening definitions, described in Lithuanian invention LT5493 B. This method is based on model, that tightened threaded joint can be assumed as mechanical vibration system, where every bolt or pin vibrates relatively to tightened details. Every dynamic characteristic of bolt or pin (natural frequencies, amplitude-frequency, phase-frequency, amplitude-phase, etc.) depends on bolt or pin tightening degree. By comparing corresponding characteristics of mentioned system and by comparing those with experimentally given, decision about every bolt or pin tightening degree can be made. Dynamical characteristics are obtained by performing calculations on digitized signal data of relative natural vibration between bolt/pin end surface and tightening detail from vibration sensor (for example, laser). Natural vibrations are excited by impacting by hammer or analogical instrument with or without impact sensor to bolt head or pin. In many cases is possible to get characteristics more simple way - from absolute bolt or pin vibration. Excitation of vibration by hammer is not controlled and y not every time equals and this makes analysis of signal more sophisticated and less accurate, therefore sometimes is no reason to use such excitation.

### 3. Description of invention

Proposed method of component tightening control method better utilizes threaded joint tightening control method, described in Lithuanian patent LT 5493 B. Proposed method differs from known methods, that tightening ratio of every bolt or pin, jointing two or more details, is evaluated from dynamic characteristics of dynamic system "bolt/pin - connected detail" which with small parameters treated as linear, taken from relative natural frequencies between connected details and bolt or pin end surface, or from absolute vibration of bolt or pin end surfaces. As dynamic characteristics it is assumed amplitude frequency, amplitude - phase, frequency - phase, Natural frequencies, amplitude spectrum, transmitting functions - also some others, if needed, which are given from mentioned above. Depending on case of , can be used not all, but one or few of these listed characteristics.

Proposed method can be explained by known fact that in vibration system "bolt/pin - connected detail" contact stiffness, friction value and in this case dynamic properties and natural frequencies of the system depends on joint connecting threaded joint tightening degree. Natural frequencies in such system can be excited by hitting to end surface of bolt/pin using hammer or similar instrument. These excited vibration can be treated as linear (or close to linear), because of their small amplitude and stiffness of joint in small amplitude can be treated with small error as permanent. In case of tightening change, stiffness of joint changes significantly and be detected from natural frequency change. There are known (R. C. Dorf, R. M. Bishop. Modem Control Systems, 1998. Addison-Wesley; 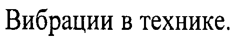 TOM 5. - 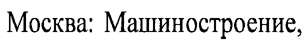 1981 and others), that having signal from natural vibration of dynamic system and knowing characteristic of exciting impact, mentioned above dynamical characteristics can be calculated. Therefore it is proposed to use experimentally taken natural vibration data from excited dynamic system "bolt/pin - connected detail" and afterwards calculated dynamic characteristics of relative or absolute vibration for threaded joint tightening control.

Dynamic characteristics, calculated from relative vibration between bolt/pin and one of connected details theoretically are more close to real dynamic characteristic of mentioned vibration system as taken from absolute bolt/pin vibration, which can contain unnecessary for this task harmonics. Nevertheless, to get absolute vibrations is easier technically (for example, using piezoelectric accelerometer, attached to bolt/pin end surface; often obtained frequencies are not tightening - dependent frequencies, so they can be easily eliminated during analysis or they are not taken into account. Therefore decision on relative or absolute vibration use is technologically based.

Process of getting dynamic characteristics is simplified in case, if exciting impact load can be treated as instant. This condition can be applied for main number of cases, but then desired natural frequency of bolt/pin vibration period should be longer as exciting impact duration more than 10 - 15 times. In such case equipment for impact signal registration and processing is not necessary.

In case to reduce measure errors of vibrations for a dynamic characteristics calculation, there are used few sets of natural frequency signal. For every bolt/pin tightening control is used separate sets of natural vibration signal. When force of exciting impact is not registered, there is reason to unify impact during all tests and make impact duration as short as possible, and then there are need to excite vibrations not by hammer or similar instrument, but using special equipment. There are proposed to use special equipment, which shoots ball, made from metal or another material to bolt/pin using pneumatic or another method and create short force impact. To obtain short duration of impact, ball is recommended to produce from material with high modulus of elasticity, from hard material.

Proposed method not requires special design of threaded joint. Also force impact, for more convenience can be applied to different end of bolt/pin from measured one. In such case equipment remain the same, but vibration amplitude will be smaller.

Proposed invention is intended to use for responsible joints, which are produced with high accuracy, tight tolerances and small assembly errors, therefore mentioned factors have marginal influence to dynamic characteristics.

### 3.1. Data, revealing Invention background

Control of detail tightening is performed using dynamic characteristics of dynamic system "bolt/pin - connected details". These dynamic characteristics are amplitude - frequency, phase - frequency, amplitude - phase characteristics, natural and resonant frequencies, spectrum of mentioned and vibration amplitude, system transmitting functions and derived from listed above characteristics, describing all dynamic properties of vibration system "bolt/pin - connected details".

Desired tightening value is obtained by comparing dynamic characteristics or some of them for every vibration system "bolt/pin - connected details" with proper tightened standard ones. These characteristics are obtained from numerically processed vibrations signals of vibration system "bolt/pin - connected details". Relative natural vibrations are measured by contactless sensor or laser between bolt head end surface and tightened detail surface, absolute natural vibrations are taken by measuring absolute vibrations of bolt head/pin end surface. Natural vibrations are excited by applying impact to bolt head or bolt head/pin end surface. Impact is caused by hitting to mentioned places by hammer or analogical him instrument. In case when impact cannot be treated as instant, i.e. its duration isn't 10-15 times shorter as period of highest natural frequency, sensor of impact force data necessary, which gives impact force signal, necessary for a detection of vibration system "bolt/pin - connected details" characteristics. In case when impact can be treated as instant, impact force measurement is not necessary. In such situation natural vibrations can be excited by hammer or analogical instrument or possible to implement a special shooting device, which can shoot calibrated high strength material ball to bolt head, end surface to bolt or pin; device should able to change shoot speed and direction. Implementation of such shooting device enables more equal impact properties and vibration signal necessary for obtain dynamic characteristics, ensures short duration of impact.

### 4. Description of drawings

Fig. 1 shows connection of to details by bolt with head, which is bypassing through hole without thread in one of details and is screwed in to another detail, when bolt head is used for exciting of natural vibrations and their measurement.
Fig. 2 shows assembly, which differs from analogical assembly shown in Fig. 1 that bolt beam is bypassed through both details and nut is tightened at the end of bolt, end surface of which can be used natural vibration exciting.
Fig. 3 shows assembly, which differs from shown in Fig. 1 that two details are connected by pin with nut, pin is bypassed by one's detail hole without thread and screwed in to another detail, sticking end of pin from nut can be used for natural vibration exciting and measurement.
Fig. 4 shows assembly, differing from Fig. 1 and Fig. 3 that details are connected by pin with two nuts; pin is bypassed through holes in both details without thread; both sticking ends of pin can be used for natural vibration exciting and measuring.
Fig. 5 shows assembly, differing from shown in Fig. 1 and Fig. 2 that for measuring of natural vibrations is used end of bolt beam and excitations can be applied from head and from end.
Fig. 6 shows case when in Fig. 1, 2, 3, 4, 5 shown assemblies vibrations are measured by laser sensor.
Fig. 7 shows pneumatic shooter of calibrated balls, replacing hand driven excitation hammer or analogical instrument, in case when impact can be treated as instant.

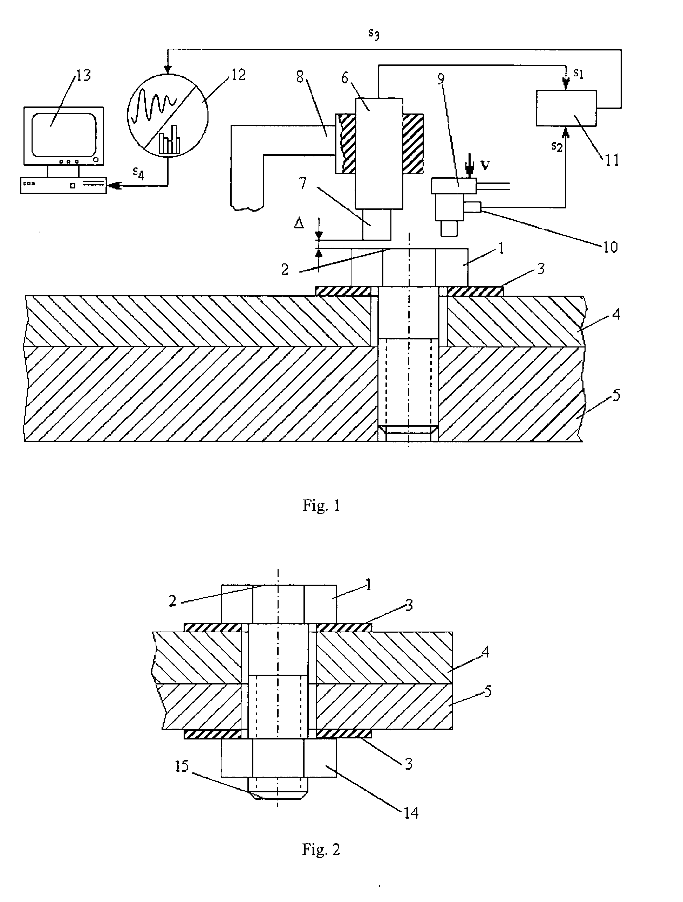

Fig. 1 explication: 1 - bolt; 2 - bolt head upper surface; 3 - washer; 4, 5 - connected details; 6 - vibration sensor; 7 - sensor 6 measuring nozzle; 8 - support of sensor 6; 9 - hammer or analogical instrument, for manual force impact; 10 - force impact registering sensor, installed in hammer 9 or analogical instrument; 11 - amplifier and calibrator of analogous signals s₁ and s₂ from sensors 6, 10 correspondingly; 12 - analog/digital transducer s₄; 13 - computer (PDA or another type) for signal s₄ processing; Δ - distance from sensor nozzle 7 and bolt head surface 2; V - velocity of hammer 9 during impact.
Fig. 2 shows part, which not shown in Fig. 1: 14 - nut; 15 - bolt beam end surface.

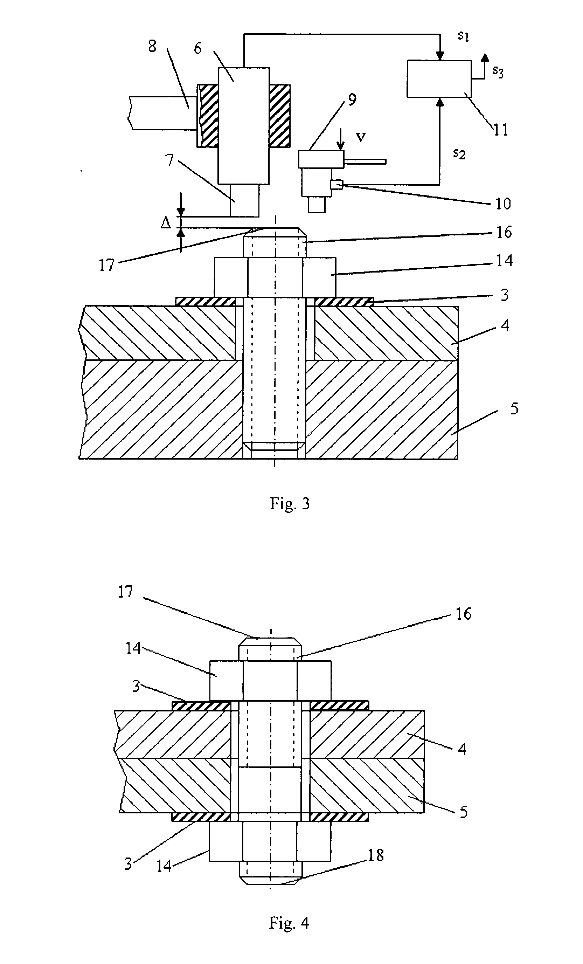

Fig. 3 shows parts, which not shown in Fig. 1 and 2 : 16 - pin; 17 - end surface of pin 16; . Δ - distance from pin end surface 17 to measuring nozzle 7 of sensor 6.
Fig. 4 shows parts, which not shown in Fig. 1, 2 and 3 :18 - end surface of pin 16, opposite to end surface 17.

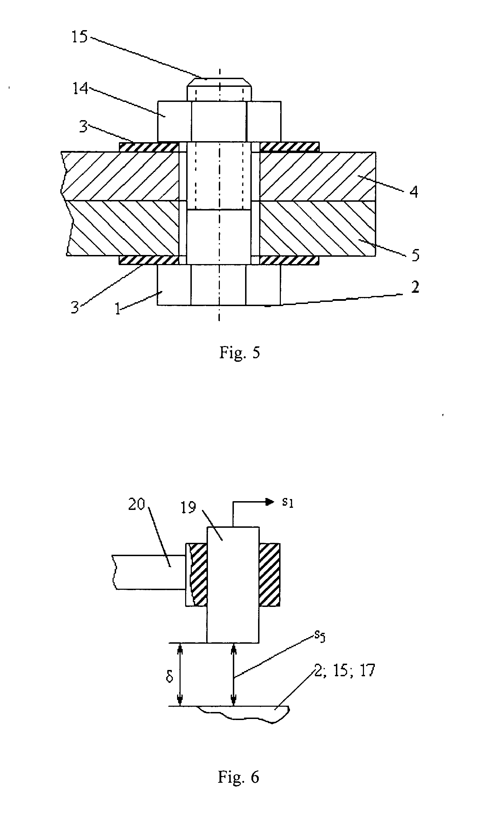

Fig. 5 has no parts, not shown in Fig. 1, 2, 3, 4.
Fig. 6 shows parts, which not shown in Fig. 1, 2, 3, 4, 5: 19 - laser vibrations sensor for surfaces 2, 15, 17; 20 - frame of sensor 19; . δ - distance from sensor 19 to measuring surface; . s₅ - pointed to measuring surface and reflected laser beam.

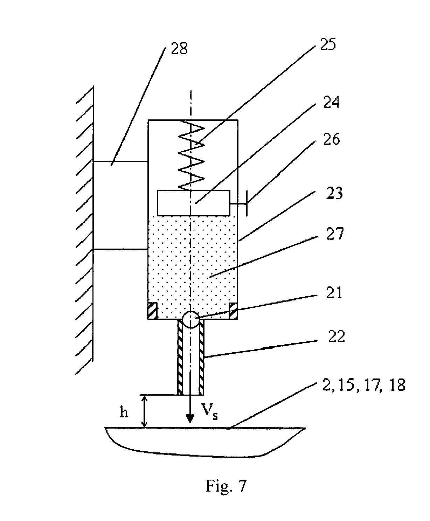

Fig. 7 shows parts, which not shown in Fig. 1, 2, 3, 4, 5, 6: 21 - calibrated ball; 22 - pointing barrel of calibrated ball 21; 23 - frame of equipment; 24 - piston; 25 - piston driving spring; 26 - retainer of piston 24, 27 - air compressing chamber; 28 - body of device, 2, 15, 17, 18 - surfaces of bolt or pin, to which ball is pointed, V_{S} - velocity of fired ball in moment of hitting targeted surface on bolt or pin; h - displacement of fired ball from barrel to hit point.

### 5. Description of invention realization

### 5.1. Overview

There is presented method of tightening control for detail connection by bolts, pins or nuts, which is realized by comparing one or several dynamic characteristics of each bolt or pin, treated as vibration systems "bolt/pin - connected detail" to properly tightened system corresponding dynamic characteristics. There are utilized dependencies of such dynamic characteristics to tightening bolt/pin tightening degree in proposed method. Dynamic characteristics are taken experimentally from natural vibrations of such system, excited by impact and processing signal of vibrations and signal of impact. In case, when impact force signal can be treated as instant (its duration 10...15 time shorter than period of highest desired vibration frequency), process signal of impact is not necessary. This suggestion is correct in many cases. For definition of dynamic characteristics can be used natural absolute bolt/pin vibrations or relative vibrations between bolt/pin and connected detail.

Natural vibration exciting impact can be produced using two methods - using manual hammer (or analogical instrument) with impact force sensor or, in case of instant impact, without it; or using special device, which fires ball to correspondent surface of bolt/pin. Use of shooting device allowed only in case of instant impact, but impact values are equal, which makes definition of dynamic characteristics more accurate.

### 5.2. Description of method and its realization equipments

Correspondence of each tightened joint to necessary value is checked separately by defining each bolt/pin tightening experimentally. Using ways, shown in Fig. 1, 2, there is measured tightening of bolt 1, connecting details 4 and 5, by registering natural vibrations of bolt head 2 as relative to detail 4 or absolute natural vibrations. Vibrations are excited by hammer 9 or analogical instrument by applying light impact to bolt head surface 2, or, in case shown in Fig. 2, to bolt head surface 2 or bolt beam end surface 15. These vibrations are measured by sensor 6, which measuring nozzle 7 measures vibrations of surface 2 through small air gap (Δ ≅ 0,01ö0,1 mm), when capacity sensor is used or touching surface 2 in case of induction sensor (then Δ = 0). When relative vibrations are measured, frame 8, holding sensor 6, tightly fixed to one of details using glue, magnetic methods, etc. In case of absolute vibrations, sensor is fixed close to or directly on vibrating surface 2, for example, by measuring absolute acceleration of this surface. In this case frame 8 not necessary.

Often impact can be treated as instant, then signal s₂ and its processing is not necessary. In this case impact can be applied not only by hammer 9 or analogical instrument without force sensor, but also by fired from special device ball. Such pneumatic ball firing gun is shown in Fig. 7. There calibrated ball 21 before firing is placed in the beginning of the barrel 22. Piston 24, resting in device body 23, by pressing spring 25 is placed to initial position, as shown in Fig. 7, where it piston 24 is fixed by retainer 26. By releasing retainer 26, air in chamber 27 is compressed by piston 24, which is driven by spring 25 and calibrated ball 21 through barrel 22 is fired. Impact force, caused by calibrated ball 21 depends on velocity V_{S} in moment of touch to the place of applying force, impact angle to applied surface, material of ball, hardness, etc. Impact force can be adjusted changing distance h, stiffness of spring 25, compression value, and direction of velocity V_{S}. Shooting device is fixed close to impact application place using frame 28.

In case of detail connection by pins and nuts tightening in threaded joint is evaluated as in case of bolt connection the same equipment is used (Fig. 3, 4). In this case natural vibrations are measured at the pin 16 end surface 17, excited them by applying impact to this surface or opposite pin end surface 18 (Fig. 4). As shown in Fig. 3, natural vibrations in case of bolt connection, possible to measure vibrations on bolt end surface 15, excite vibrations using surfaces 2 or 15 (Fig. 5).

Fig. 6 shows case of application of laser beam s₅, reflecting to measuring surfaces 2, 15 or 17 for natural vibrations measurement. Distance δ from measured vibration surface to laser 19 is much bigger than distance Δ. Method of measuring and used equipment, except sensor replacement by laser sensor are the same as described above. Laser 19 holding frame 20 for absolute vibration measuring is fixed to ground or surface, vibrations of which is not taken into account; in case of relative vibration measuring frame 20 is fixed to one of connected detail, for example detail 4.

## Claims

1. A method of threaded joint tightening control, in case when details are tightened by bolts, bolts and nuts, pins and nuts, where about tightening validity is decided from every bolt/pin tightening value and about validity of tightening of joint is decided by comparing of experimentally taken dynamic characteristics form treated as linear dynamic system of every jointing bolt/pin with given prescribed dynamic characteristics, such as amplitude - frequency, phase - frequency, amplitude - phase, natural frequencies, resonant frequencies, their and vibration amplitude spectrum or other derived characteristics, several or one of them, when these characteristics are taken from relative natural vibration of mentioned dynamic systems excited by hammer or similar instrument with impact force sensor after processing signals from vibration sensor and impact force sensors.

2. The method of claim 1, where dynamic characteristics of vibration system "bolt/pin - connected detail" are taken from absolute vibrations of bolt/pin.

3. The methods of claim 1 and 2, where vibration exciting force impact duration is significantly shorter (about 10...15 times) than highest taken into account frequency period, dynamic characteristics are given only from signal of relative or absolute natural vibrations.

4. The methods of claim 1 and 3, where natural frequency vibrations exciting impact tool bolt/pin are made by ball, fired from special shooting device.

5. A device to realize methods of claims 1 and 2, where consists from vibration measuring sensor for relative natural vibration measurement, or absolute vibration measurement, sensor frame, fixing sensor to relative vibration basis in case of relative vibrations or fixing sensor to vibrating surface in case of absolute vibration, hammer or analogical instrument with impact force sensor for vibration excitation, equipment for vibration and impact force signals transmitting and coding for further processing in computer with corresponding software for dynamic characteristics calculating from mentioned signals.

6. The device of claims 1, 2, 3, 4, 5, 6, where for natural vibrations measuring is used laser sensor, which in case of relative vibrations is fixed by frame to relative vibration basis, in case of absolute vibrations fixed to surface, which vibration is not taken into account.

7. The device of claim 3, where instead of natural vibrations exciting hammer or analogical instrument is used device, shooting by metallic or other hard material ball to bolt/pin, which is fixed in neighborhood to exciting bolt/pin and letting to change velocity of fired ball, firing distance and angle between device barrel and bolt/pin surface.
